# EUROPÄISCHE PATENTSCHRIFT

(11) **EP 1 039 288 B1**
(45) Veröffentlichungstag und Bekanntmachung des Hinweises auf die Patenterteilung: **25.08.2004**
(21) Anmeldenummer: 00106217.3
(22) Anmeldetag: 22.03.2000
(51) Int. Cl.: G01N 1/34, G01N 30/06, G01N 1/28

(54) **Verfahren zur Festphasenmikroextraktion und Analyse sowie einen Sammler hierfür**
Method for solid phase micro-extraction, analysis and collector therefor
Procédé pour la micro-extraction en phase solide, l'analyse ainsi qu'un collecteur à cet effet

(30) Priorität: 26.03.1999 DE 19913809; 14.07.1999 DE 19933017
(43) Veröffentlichungstag der Anmeldung: 27.09.2000
(60) Teilanmeldung: 04000425.1
(73) Patentinhaber: Gerstel Systemtechnik GmbH & Co. KG, 45473 Mühlheim (DE)
(72) Erfinder: Sandra, Patrik, Prof. Dr., 8510 Kortrijk-Marke (BE); Baltussen, Erik, 5232 JG's-Hertogenbosch (NL); David, Frank, Dr., 8310 Brügge (BE)
(74) Vertreter: Sparing - Röhl - Henseler Patentanwälte

(56) Entgegenhaltungen:
- EP-B- 0 523 092
- WO-A-97/11763
- DE-A- 19 619 790
- DE-A- 19 751 968
- GEPPERT H: "SOLID-PHASE MICROEXTRACTION WITH ROTATION OF THE MICROFIBER" ANALYTICAL CHEMISTRY, AMERICAN CHEMICAL SOCIETY. COLUMBUS, US, Bd. 70, Nr. 18, 15. September 1998 (1998-09-15), Seiten 3981-3982, XP000784049 ISSN: 0003-2700
- EISERT R ET AL: "Design of automated solid-phase microextraction for trace analysis of organic compounds in aqueous samples" JOURNAL OF CHROMATOGRAPHY A, ELSEVIER SCIENCE, NL, Bd. 776, Nr. 2, 1. August 1997 (1997-08-01), Seiten 293-303, XP004086121 ISSN: 0021-9673
- GROTE C ET AL: "AN AUTOMATIC ANALYZER FOR ORGANIC COMPOUNDS IN WATER BASED ON SOLID-PHASE MICROEXTRACTION COUPLED TO GAS CHROMATOGRAPHY" ANALYTICAL CHEMISTRY, AMERICAN CHEMICAL SOCIETY. COLUMBUS, US, Bd. 71, Nr. 20, 15. Oktober 1999 (1999-10-15), Seiten 4513-4518, XP000854092 ISSN: 0003-2700
- BOYD-BOLAND A A ET AL: "NEW SOLVENT-FREE SAMPLE PREPARATION TECHNIQUES BASED ON FIBER AND POLYMER TEHNOLOGIES" ENVIRONMENTAL SCIENCE AND TECHNOLOGY, AMERICAN CHEMICAL SOCIETY. EASTON, PA, US, Bd. 28, Nr. 13, 1994, Seiten 569A-574A, XP000910328 ISSN: 0013-936X

## Beschreibung

Die Erfindung betrifft ein Verfahren zur Festphasenmikroextraktion und Analyse nach dem Oberbegriff des Anspruchs 1 sowie einen Sammler hierfür.

Aus Boyd-Boland et al., Environ. Sci. Technol. Vol. 28, No. 13, 1994, 569A-574A und aus EP 0 523 092 B1 ist ein Verfahren dieser Art bekannt, bei dem eine spezielle Spritze verwendet wird, die eine durch die Spritzennadel ausschiebbare Faser aufweist. Die zweckmäßigerweise beschichtete Faser wird mit der die zu untersuchenden Substanzen enthaltenden Trägerflüssigkeit, die gleichzeitig gerührt wird, in Kontakt gebracht, wonach die Faser eingezogen und die Spritzennadel in eine Aufgabeeinrichtung eines Analysegeräts eingebracht wird, woran sich eine Desorption von anhaftenden Substanzen unter Verwendung eines Trägergases anschließt. Die Faser ist nur sehr beschränkt für zu untersuchende Substanzen aufnahmefähig und wird zudem nur in die gerührte Trägerflüssigkeit gehalten, so daß die Empfindlichkeit der Analyse selbst dann zu wünschen übrig läßt, wenn man die beschichtete Faser vibriert. Aus DE 196 19 790 C2 ist es zusätzlich bekannt, die als Sammler fungierende Mikrofaser mittels eines Elektromotors mit einer frei wählbaren Umdrehungsgeschwindigkeit um die eigene Achse rotieren zu lassen.

Aufgabe der Erfindung ist es, ein Verfahren nach dem Oberbegriff des Anspruchs 1 zu schaffen, das eine wesentlich verbesserte Empfindlichkeit bietet Diese Aufgabe wird mittels der Merkmale des Anspruchs 1 gelöst. Die Erfindung bettrifft auch einen Sammler hierfür.

Durch Verwendung eines von einem Magnetrührer und/oder einer Ultraschallrührvorrichtung betätigten Rührelements wird die Analysegenauigkeit ganz erheblich gesteigert, wobei es zudem möglich ist, großvolumige Gefäße, etwa Litergefäße, für die die zu untersuchenden Substanzen enthaltene Flüssigkeit zu verwenden.

Weitere Ausgestaltungen der Erfindung sind der nachfolgenden Beschreibung und den Unteransprüchen zu entnehmen.

Die Erfindung wird nachstehend anhand von in den beigefügten Abbildungen schematisch dargestellten Ausführungsbeispielen einer Einrichtung zum Durchführen des Verfahrens und von Passivsammlem näher erläutert.
Fig. 1 zeigt schematisch eine Einrichtung zur Durchführung des Verfahrens zur Festphasenmikroextraktion und Analyse von in einer Trägerflüssigkeit befindlichen Substanzen.
Fig. 2 bis 4 zeigen verschiedene Ausführungsformen von Passivsammlern im Schnitt.
Fig. 5 zeigt einen Vergleich von zwei Gleichgewichtskurven bezüglich des Standes der Technik und der Erfindung.
Fig.6 zeigt schematisch eine weitere Einrichtung zur Durchführung des Verfahrens zur Festphasenmikroextraktion und Analyse von in einer Trägerflüssigkeit befindlichen Substanzen.
Fig. 7 zeigt schematisch ein Head-Space-Gefäß.

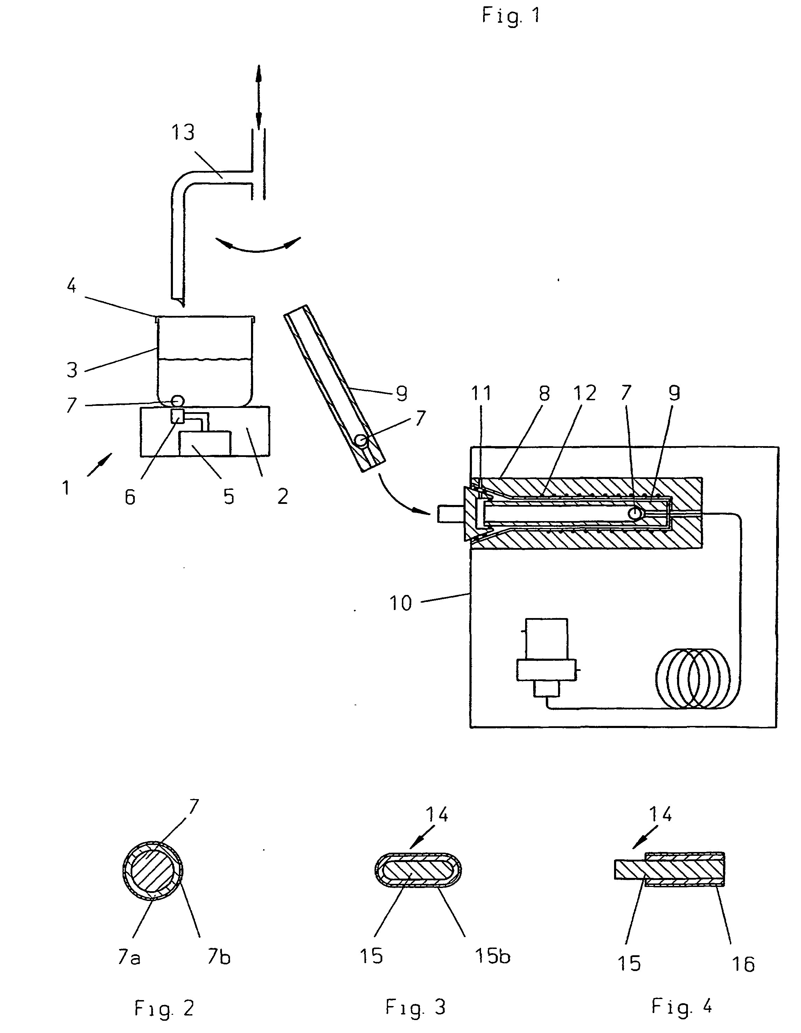

Gemäß Fig. 1 ist ein Magnetrührer 1 vorgesehen, der ein auf einem Untersatz 2 befindliches, becherglasartiges Gefäß 3 umfaßt, das zweckmäßigerweise oberseitig durch ein Septum 4 verschlossen sein kann. Das Gefäß 3 nimmt vor dem Verschließen mit dem Septum 4 eine Trägerflüssigkeit mit zu analysierenden Substanzen auf. Das Befüllen und Verschließen des Gefäßes 3 kann vorab an einem Probenahmeort vorgenommen werden. Bei der Trägerflüssigkeit kann es sich um Wasser und/oder ein organisches Lösungsmittel oder -gemisch oder um verflüssigtes Gas handeln.

Der Untersatz 2 beinhaltet einen Elektromotor 5, dessen Welle einen Magneten 6 exzentrisch trägt. Im Gefäß 3 befindet sich eine Rührkugel 7 aus ferromagnetischem Material wie Eisen oder Stahl, die zweckmäßigerweise glas- bzw. kunststoffummantelt ist und einen Durchmesser im Bereich von wenigen Millimetern haben kann. Für die Kunststoffummantelung 7a kann z.B. Polytetrafluorethylen oder ein anderes fluoriertes Kohlenwasserstoffpolymer verwendet werden. Die Rührkugel 7 ist vorzugsweise mit einer aktiven Phase 7b zur Sorption/Adsorption von in der Trägerflüssigkeit enthaltenen Substanzen belegt. Hierbei kann es sich um eine Beschichtung aus der Gruppe umfassend Polyethylenglykol, Silikon, Polyimid, Octadecyltrichlorsilan, Polymethylvinylchlorsilan, flüssigkristalline Polyacrylate, gepfropften selbstorganisierten monomolekularen Schichten und anorganischen Beschichtungsmaterialien handeln.

Die Rührkugel 7 läßt man während einer ausreichenden Zeit rühren, während der sie intensiv mit der Trägerflüssigkeit und damit mit den darin enthaltenen Substanzen in Kontakt gelangt und letztere sorbiert und/oder adsorbiert, so daß sie als Sammler dient. Nach Beendigung des Rührens wird die Rührkugel 7 ergriffen und in einer Festphasenextraktionseinrichtung, vorzugsweise einer Desorptionseinrichtung 8 angeordnet. Letztere umfaßt zweckmäßigerweise ein Desorptionsröhrchen 9 mit einem Durchmesserabschnitt, dessen Durchmesser etwas größer als derjenige der Rührkugel 7 ist, an den sich über einen kegelstumpfförmigen Abschnitt ein Durchmesserabschnitt anschließt, dessen Durchmesser kleiner als derjenige der Rührkugel 7 ist. Die Desorptionseinrichtung 8 ist Teil eines Analysegeräts 10, etwa eines Gaschromatographen, an einen Trägergasanschluß 11 angeschlossen, so daß Trägergas durch das Desorptionsröhrchen 9 an der Rührkugel 7 unter Desorption von daran haftenden Substanzen vorbeiströmen und letztere einer Analyse zuführen kann. Die Desorptionseinrichtung 8 umfaßt vorzugsweise eine Heizeinrichtung 12, um eine Thermodesorption durchführen zu können.

Die Rührkugel 7 kann automatisch mittels eines das Septum 4 durchstoßenden Entnahmeorgans 13, das in Form eines Greifers, Saugers oder auch als Magnet ausgebildet sein kann, aus dem Gefäß 3 entnommen und in dem Desorptionsröhrchen 9 angeordnet werden, das dann automatisch in der Desorptionseinrichtung 8 plaziert werden kann, so daß die gesamte Festphasenmikroextraktion und Analyse automatisch vornehmbar ist. Hierzu können für mehrere Proben entsprechende Gefäße 3 auf einem schrittweise drehbaren Drehteller angeordnet werden, unter dem in einer Position der Untersatz 2 des Magnetrührers 1 angeordnet ist.

Um reproduzierbar messen zu können, sind im allgemeinen Rührzeiten von ca. 45 bis 60 min erforderlich.

Anstelle eines Rührelements in Form einer Rührkugel 7 läßt sich auch ein solcher in Form eines Rührstabs 14 verwenden. Dieser kann einen beschichteten stabförmigen Träger 15 aus ferro- oder paramagnetischem Material aufweisen, wobei er im letzteren Falle eine Mindestlänge von etwa 2 cm haben sollte, während bei Einsatz von ferromagnetischem Material auch kleinere Längen möglich sind. So kann es sich um einen an den Enden abgerundeten und insgesamt mit der aktiven Phase 15b beschichteten, stabförmigen Träger 15 (Fig. 3) oder auch um einen solchen aus einem Metalldrahtabschnitt handeln, der von einem zylindrischen Mantel 16 aus schlauchartigem Material der aktiven Phase umgeben ist (Fig. 4). Der stabförmige Träger 15 kann beispielsweise einen Durchmesser von ca. 3 bis 6 mm besitzen.

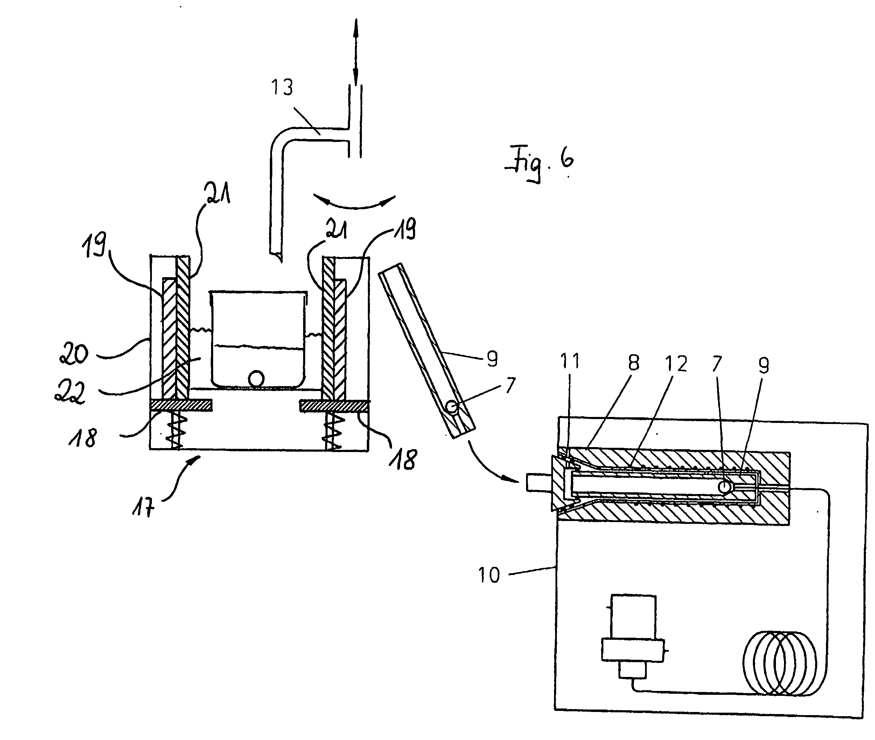

Es kann gegebenenfalls ebenfalls eine verbesserte Analyse erzielt werden, wenn die die Substanzen enthaltende und in einem einen Sammler, vorzugsweise eine Rührkugel 7, enthaltenen Gefäß befindliche Trägerflüssigkeit alternativ oder zusätzlich mittels Ultraschall in Bewegung versetzt wird. Fig. 6 zeigt eine Ausführungsform einer solchen Ultraschallrührvorrichtung als Schwingtopf 17, bei der ein oder mehrere mittels Isolierplatte 18 abgeschirmte Ultraschallgeber (Schwinger) 19 in ein Gehäuse 20 unterhalb und/oder seitlich eingebaut sind. Eine dem Ultraschallgeber 19 vorgelagerte Metallwand 21 mit einer Wandstärke von d = n * λ/2 (λ: Schallwellenlänge) überträgt die Schwingungen auf eine Koppelflüssigkeit 22 des Schwingtopfes 17, vorzugsweise Wasser, die in Bewegung versetzt wird. In dem Schwingtopf 17 wird das Gefäß mit den zu untersuchenden Substanzen eingebracht.

Hierbei kann als Gefäß 3 auch vorteilhaft ein solches eines Magnetrührers verwendet werden, wobei mittels der beschichteten magnetischen Rührkugel 7 als Sammler gerührt wird, so daß die Ultraschallbeaufschlagung zusätzlich zum Magnetrühren erfolgt.

Generell ist eine thermische, flüssige oder eine Desorption mittels überkritischer Gase möglich.

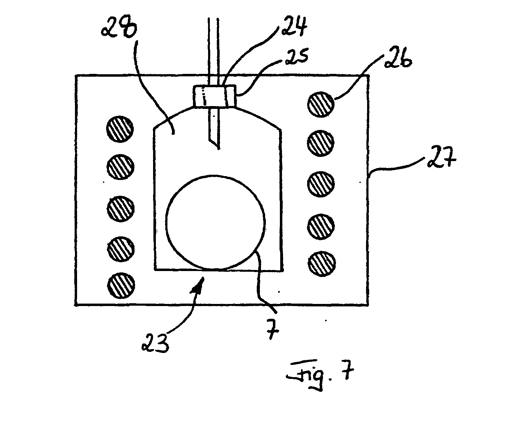

Anstatt in eine Thermodesorptionseinrichtung 8 eingebracht zu werden, kann das Rührelement mittels des Entnahmeorgans 13 in einem Head-Space-Gefäß 23 (Fig. 7) angeordnet werden, dessen Durchmesser nur wenig größer ist als der Durchmesser der Rührkugel 7. Das Head-Space-Gefäß 23 wird anschließend durch ein Septum 24 und einen Dichtring 25 mittels eines Verschlußinstrumentes verschlossen und in einen Head-Space-Kopf 26 eingebracht. In diesem wird das Head-Space-Gefäß 23 mittels einer Heizvorrichtung 27 vorgeheizt und es kommt zum Druckaufbau, bei dem sich ein Gleichgewicht für die flüchtigen zu untersuchenden Substanzen mit der Gasphase 28 oberhalb der Rührkugel 7 einstellt. Diese können durch eine das Septum 24 durchstoßende Spritze entnommen werden und der Trennsäule etwa eines Gaschromatographen zugeführt werden.

Anstatt in einer Thermodesorptionseinrichtung 8 desorbiert zu werden, kann das Rührelement auch in eine eine organische Flüssigkeit enthaltende Extraktionseinrichtung eingebracht werden, wobei als organische Flüssigkeit eine solche verwendet wird, die eine hohe Wechselwirkung mit den zu untersuchenden Substanzen aufweist und letztere - gegebenenfalls unter einer Rührbewegung des Rührelements gegenüber dieser Flüssigkeit - aufnimmt, wonach die mit den zu untersuchenden Substanzen angereicherte Flüssigkeit mittels einer Spritze aufgenommen und einer Aufgabeeinrichtung etwa eines Gaschromatographen zugeführt wird, um mittels eines Trägergases etwa über eine gaschromatographische Trennsäule einer Analyse zugeführt zu werden.

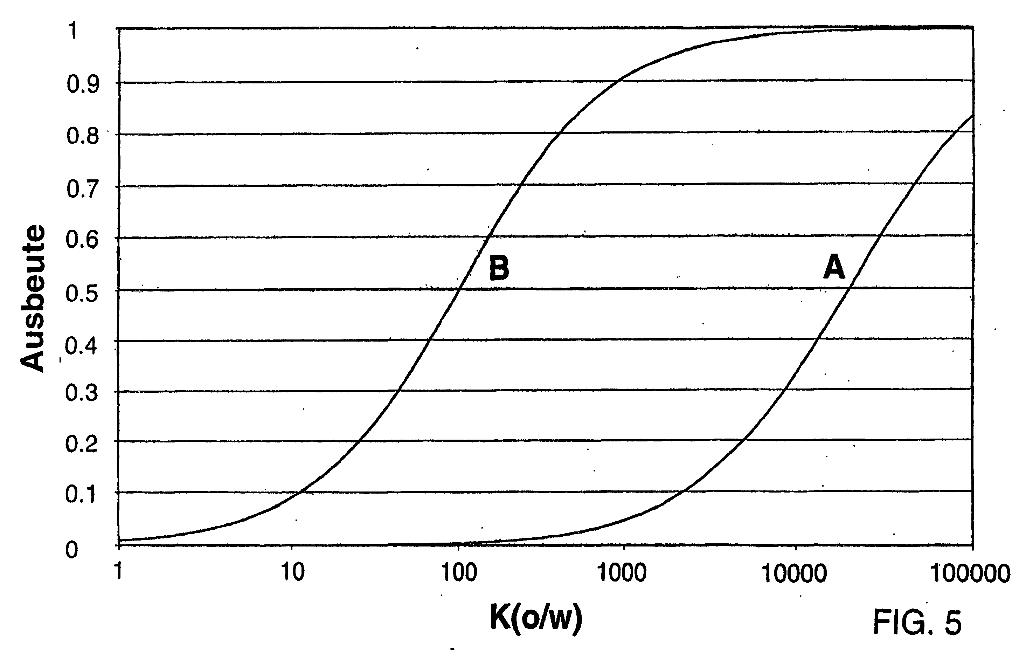

Aufgrund der Verwendung eines Rührelements in einem Magnetrührer bzw. alternativ oder zusätzlich in einer Ultraschallrührvorrichtung und dessen intensiven Kontakt mit der die zu untersuchenden Substanzen enthaltenden Trägerflüssigkeit läßt sich eine Analysenempfindlichkeit erzielen, die gegenüber der Verwendung der bekannten Faser um Größenordnungen, beispielsweise etwa 1000-fach besser ist. Fig. 5 zeigt ein Vergleichsdiagramm bezüglich der Ausbeute (auf der Ordinate aufgetragen) von aufgenommenen Substanzen für eine bekannte, mit aktiver Phase beschichtete Faser (Kurve A) und einen mit aktiver Phase ummantelten Rührstab, der mittels Magnetrührers gemäß der Erfindung (Kurve B) bei Stoffgleichgewicht gerührt wurde, wobei auf der Abzisse der Konzentrationsquotient (K(o/w)) einer Substanz in Oktanol und Wasser aufgetragen ist. Dieser Koeffizient ist (für Normaltemperatur) für eine große Vielzahl von Substanzen der Literatur entnehmbar. Beträgt dieser Konzentrationsquotient beispielsweise 100, so erkennt man aus dem Diagramm von Fig. 5, daß sich hierbei bezüglich der beschichteten Faser eine Ausbeute von etwa 1% und erfindungsgemäß eine solche von etwa 50% ergibt. Bei einem Konzentrationskoeffizienten unter 100 läßt sich im allgemeinen über die beschichtete Faser keine zuverlässige Messung vornehmen, während das ummantelte Rührelement durchaus noch verläßliche Messungen ermöglicht. Insgesamt wird mit dem ummantelten Rührelement die Meßgenauigkeit erheblich, d.h. um Zehnerpotenzen verbessert und der Meßbereich erheblich erweitert, indem die Analyseempfindlichkeit etwa um einen Faktor 1000 verbessert wird. Eine Verbesserung der Analyseempfindlichkeit durch Erwärmen der die zu untersuchenden Substanzen enthaltenden Flüssigkeit, wie sie für eine beschichtete Faser in vielen Fällen notwendig ist und zudem Meßfehler verursachen kann, ist bei dem ummantelten Rührelement im allgemeinen nicht notwendig.

Außerdem kann ein derartiges Rührelement als Passivsammler in einer zu untersuchende Substanzen enthaltenden gasförmigen, beispielsweise belasteten Umgebung angeordnet oder von einer in der Umgebung arbeitenden Person getragen werden, wobei der Passivsammler der Umgebung eine ausreichende Zeit ausgesetzt und anschließend die davon sorbierten und/oder adsorbierten Substanzen einer Extraktion unterworfen wird, wonach desorbierte Substanzen über eine Aufgabeeinrichtung mittels eines Trägergases zur Analyse transportiert werden, etwa um persönliche Belastungen mit Schadstoffen zu kontrollieren.

## Patentansprüche

1. Verfahren zur Festphasenmikroextraktion und Analyse von in einer Trägerflüssigkeit befindlichen Substanzen, wobei ein Sammler mit der die Substanzen enthaltenden, gerührten Flüssigkeit während einer ausreichenden Zeit in Kontakt gebracht und anschließend einer Festphasenextraktion bezüglich wenigstens einer an dem Sammler haftenden Substanz unterworfen wird und desorbierte Substanzen mittels eines Trägergases zur Analyse transportiert werden, **dadurch gekennzeichnet, daß** die die Substanzen enthaltende Trägerflüssigkeit in einem Gefäß (3) eines Magnetrührers (1) mittels eines beschichteten magnetischen Rührelements (7) als Sammler gerührt und/oder die Trägerflüssigkeit mittels Ultraschall relativ zum Sammler in innige Bewegung versetzt und anschließend das Rührelement (7) in einer Festphasenextraktioneinrichtung (8) angeordnet wird.

2. Verfahren nach Anspruch 1, **dadurch gekennzeichnet, daß** ein Rührelement (7) verwendet wird, das eine Glas- bzw. Kunststoffbeschichtung trägt.

3. Verfahren nach einem der Ansprüche 1 oder 2, **dadurch gekennzeichnet, daß** ein Rührelement (7) verwendet wird, das eine Beschichtung aus der Gruppe umfassend Polyethylenglykol, Silikon, Polyimid, Octadecyltrichlorsilan, Polymethylvinylchlorsilan, flüssigkristalline Polyacrylate, gepfropften selbstorganisierten monomolekularen Schichten und anorganischen Beschichtungsmaterialien trägt.

4. Verfahren nach einem der Ansprüche 1 bis 3, **dadurch gekennzeichnet, daß** das Rührelement (7) mittels einer automatischen Entnahmeeinrichtung durch ein das Gefäß (3) des Magnetrührers (1) verschließendes Septum (4) hindurch entnommen und in einem Desorptionsröhrchen (9) angeordnet wird.

5. Verfahren nach einem der Ansprüche 1 bis 4, **dadurch gekennzeichnet, daß** als Rührelement (7) eine Rührkugel verwendet wird.

6. Verfahren nach einem der Ansprüche 1 bis 4, **dadurch gekennzeichnet, daß** als Rührelement (7) ein Rührstab verwendet wird.

7. Verfahren nach Anspruch 6, **dadurch gekennzeichnet, daß** als Rührelement (7) ein bemantelter Metalldrahtabschnitt verwendet wird.

8. Verfahren nach einem der Ansprüche 1 bis 7, **dadurch gekennzeichnet, daß** die Festphasenextraktion thermisch vorgenommen wird.

9. Verfahren nach Anspruch 8, **dadurch gekennzeichnet, daß** die Festphasenextraktion dynamisch (Fig. 1) oder statisch (Fig. 7) vorgenommen wird.

10. Verfahren nach einem der Ansprüche 1 bis 7, **dadurch gekennzeichnet, daß** die Festphasenextraktion über eine organische Flüssigkeit mit hoher Wechselwirkung bezüglich der zu untersuchenden Substanzen vorgenommen und eine mit einer Spritze aufgenommene Probe in eine von einem Trägergasstrom durchströmte Aufgabeeinrichtung aufgegeben wird.

11. Verfahren nach einem der Ansprüche 1 bis 10, **dadurch gekennzeichnet, daß** eine gaschromatische Analyse vorgenommen wird.

12. Sammler für die Festphasenmikroextraktion und Analyse zu untersuchender Substanzen gemäß einem oder mehreren der Ansprüche 1-11, insbesondere zum Einsetzen in eine Thermodesorptionsvorrichtung eines Gaschromatographen, bestehend aus einem als Rührelement (7) für einen Magnetrührer geeigneten Träger (15) aus magnetischem Material, der mit einer sorbierenden und/oder adsorbierenden Beschichtung für die zu untersuchenden Substanzen versehen ist

13. Sammler nach Anspruch 12, **dadurch gekennzeichnet, daß** der Träger eine Beschichtung aus der Gruppe umfassend Polyethylenglykol, Silikon, Polyimid, Octadecyltrichlorsilan, Polymethylvinylchlorsilan, flüssigkristalline Polyacrylate, gepfropften selbstorganisierten monomotekularen Schichten und anorganischen Beschichtungsmaterialien trägt.

14. Sammler nach Anspruch 12 oder 13, **dadurch gekennzeichnet, daß** der Träger stabförmig, insbesondere ein Metalldrahtabschnitt, ist.

15. Verfahren zur Festphasenmikroextraktion und Analyse von in einer Umgebung befindlichen Substanzen, wobei ein Sammler nach einem der Ansprüche 12 bis 14 der Umgebung als Passivsammler eine ausreichende Zeit ausgesetzt und anschließend der Sammler in einer Festphasenextraktionseinrichtung angeordnet wird, wobei desorbierte Substanzen mittels eines Trägergases zur Analyse transportiert werden.

## Claims

1. Method for the solid-phase microextraction and analysis of substances present in a carrier liquid, wherein a collector is brought into contact for a sufficient time with the stirred liquid containing the substances and is then subjected to solid-phase extraction in respect of at least one substance adhering to the collector, and desorbed substances are, by means of a carrier gas, transported for analysis, **characterised in that** the carrier liquid containing the substances is stirred in a vessel (3) of a magnetic stirrer (1) using a coated magnetic stirring element (7) as collector and/or the carrier liquid is set in internal motion relative to the collector using ultrasound, and the stirring element (7) is then disposed in a solid-phase extraction device (8).

2. Method according to claim 1, **characterised in that** there is used a stirring element (7) which bears a glass or plastics coating.

3. Method according to either claim 1 or 2, **characterised in that** there is used a stirring element (7) which bears a coating selected from the group comprising polyethylene glycol, silicone, polyimide, octadecyltrichlorosilane, polymethylvinylchlorosilane, liquid-crystalline polyacrylates, grafted self-organised monomolecular layers and inorganic coating materials.

4. Method according to one of claims 1 to 3, **characterised in that** the stirring element (7) is removed, using an automatic removal device, through a septum (4) closing off the vessel (3) of the magnetic stirrer (1) and is disposed in a desorption tube (9).

5. Method according to one of claims 1 to 4, **characterised in that** a stirring ball is used as the stirring element (7).

6. Method according to one of claims 1 to 4, **characterised in that** a stirring bar is used as the stirring element (7).

7. Method according to claim 6, **characterised in that** a sheathed piece of metal wire is used as the stirring element (7).

8. Method according to one of claims 1 to 7, **characterised in that** the solid-phase extraction is carried out thermally.

9. Method according to claim 8, **characterised in that** the solid-phase extraction is carried out dynamically (Fig. 1) or statically (Fig. 7).

10. Method according to one of claims 1 to 7, **characterised in that** the solid-phase extraction is carried out by means of an organic liquid having a high degree of interaction in respect of the substances being investigated and then a sample taken up using a syringe is delivered into a delivery device through which a carrier gas stream is flowing.

11. Method according to one of claims 1 to 10, **characterised in that** a gas chromatographic analysis is carried out.

12. Collector for the solid-phase microextraction and analysis of substances being investigated in accordance with one or more of claims 1 - 11, especially for insertion into a thermal desorption apparatus of a gas chromatograph, consisting of a carrier (15) which is suitable as a stirring element (7) for a magnetic stirrer and made from magnetic material and which is provided with a sorbent and/or adsorbent coating for the substances being investigated.

13. Collector according to claim 12, **characterised in that** the carrier bears a coating selected from the group comprising polyethylene glycol, silicone, polyimide, octadecyltrichlorosilane, polymethylvinylchlorosilane, liquid-crystalline polyacrylates, grafted self-organised monomolecular layers and inorganic coating materials.

14. Collector according to claim 12 or 13, **characterised in that** the carrier is bar-shaped, especially a piece of metal wire.

15. Method for the solid-phase microextraction and analysis of substances present in an environment, wherein a collector according to one of claims 12 to 14 is exposed to the environment for a sufficient time as a passive collector and the collector is then disposed in a solid-phase extraction device, wherein desorbed substances are, by means of a carrier gas, transported for analysis.

## Revendications

1. Procédé de micro-extraction en phase solide et analyse de substances contenues dans un liquide porteur, un collecteur étant mis en contact pendant une durée suffisante avec le liquide brassé contenant les substances, et étant soumis ensuite à une extraction en phase solide concernant au moins une substance adhérant au collecteur, et les substances désorbées étant transportées au moyen d'un gaz porteur pour subir une analyse, **caractérisé en ce que** le liquide porteur contenant les substances est brassé dans une cuve (3) d'un agitateur magnétique (1) au moyen d'un élément de brassage (7) magnétique revêtu agissant comme collecteur, et/ou le liquide porteur est agité au moyen d'ultrasons pour obtenir un mélange intime par rapport au collecteur, puis l'élément de brassage (7) est introduit dans un dispositif d'extraction en phase solide (8).

2. Procédé selon la revendication 1, **caractérisé en ce que** l'on utilise un élément de brassage (7), qui présente un revêtement en verre ou en matière plastique.

3. Procédé selon la revendication 1 ou 2, **caractérisé en ce que** le revêtement de l'élément de brassage (7) utilisé est choisi dans le groupe contenant le polyéthylèneglycol, la silicone, le polyimide, l'octadecyltrichlorosilane, le polyméthyl-vinylchlorosilane, les polyacrylates cristallins liquides, les couches monomoléculaires auto-ordonnées implantées et les matériaux de revêtement inorganiques.

4. Procédé selon l'une quelconque des revendications 1 à 3, **caractérisé en ce que** l'élément de brassage (7) est prélevé au moyen d'un dispositif de prélèvement automatique à travers un septum (4) obturant la cuve (3) de l'agitateur magnétique (1), et est introduit dans un petit tube de désorption (9).

5. Procédé selon l'une quelconque des revendications 1 à 4, **caractérisé en ce que** l'élément de brassage (7) utilisé est une bille de brassage.

6. Procédé selon l'une quelconque des revendications 1 à 4, **caractérisé en ce que** l'élément de brassage (7) utilisé est une tige de brassage.

7. Procédé selon la revendication 6, **caractérisé en ce que** l'élément de brassage (7) utilisé est formé par un tronçon de fil métallique gainé.

8. Procédé selon l'une quelconque des revendications 1 à 7, **caractérisé en ce que** l'extraction en phase solide est effectuée par voie thermique.

9. Procédé selon la revendication 8, **caractérisé en ce que** l'extraction en phase solide est effectuée par voie dynamique (figure 1) ou statique (figure 7).

10. Procédé selon l'une quelconque des revendications 1 à 7, **caractérisé en ce que** l'extraction en phase solide est effectuée par l'intermédiaire d'un liquide organique possédant une grande interaction avec les substances à examiner et, ensuite, un échantillon prélevé au moyen d'une seringue est introduit dans un dispositif de réception traversé par un flux de gaz porteur.

11. Procédé selon l'une quelconque des revendications 1 à 10, **caractérisé en ce que** l'analyse est effectuée par chromatographie en phase gazeuse.

12. Collecteur pour la micro-extraction en phase solide et analyse des substances à examiner selon une ou plusieurs des revendications 1 à 11, destiné en particulier à être introduit dans un désorbeur thermique d'un chromatographe en phase gazeuse, formé par un support (15), qui est apte à former l'élément de brassage (7) pour un agitateur magnétique et qui est réalisé dans un matériau magnétique revêtu d'une couche absorbante et adsorbante pour les substances à examiner.

13. Collecteur selon la revendication 12, **caractérisé en ce que** le revêtement du support est choisi dans le groupe contenant le polyéthylèneglycol, la silicone, le polyimide, l'octadecyltrichlorosilane, le polyméthylvinylchlorosilane, les polyacrylates cristallins liquides, les couches monomoléculaires auto-ordonnées implantées et les matériaux de revêtement inorganiques.

14. Collecteur selon la revendication 12 ou 13, **caractérisé en ce que** le support est réalisé en forme de tige, en particulier un tronçon de fil métallique.

15. Procédé de micro-extraction en phase solide et analyse de substances contenues dans un environnement, dans lequel un collecteur selon l'une quelconque des revendications 12 à 14 est exposé à l'environnement en tant que collecteur passif pendant une durée suffisante et le collecteur est ensuite introduit dans un dispositif d'extraction en phase solide, les substances désorbées étant transportées au moyen d'un gaz porteur pour subir une analyse.
